Europäisches Patentamt

(19) European Patent Office

Office européen des brevets

(11) Veröffentlichungsnummer: **0 087 129**
**B1**

(12) **EUROPÄISCHE PATENTSCHRIFT**

(45) Veröffentlichungstag der Patentschrift:
16.07.86

(51) Int. Cl.⁴: **C 02 F 3/30**

(21) Anmeldenummer: **83101520.1**

(22) Anmeldetag: **17.02.83**

(54) **Verfahren und Vorrichtung zur biologischen Nitrifikation von Abwasser.**

(30) Priorität: **24.02.82 DE 3206527**

(43) Veröffentlichungstag der Anmeldung:
**31.08.83 Patentblatt 83/35**

(45) Bekanntmachung des Hinweises auf die Patenterteilung:
**16.07.86 Patentblatt 86/29**

(84) Benannte Vertragsstaaten:
**AT CH DE FR LI NL SE**

(56) Entgegenhaltungen:
**EP - A - 0 008 471**
**AT - B - 318 503**
**DE - A - 2 616 212**
**DE - A - 2 900 687**
**DE - A - 2 918 950**

**LEHR- UND HANDBUCH DER ABWASSERTECHNIK Bd.
II, Seiten 602-604 (1975)**

(73) Patentinhaber: **Linde Aktiengesellschaft,
Abraham-Lincoln-Strasse 21, D-6200 Wiesbaden (DE)**

(72) Erfinder: **Morper, Manfred, Dr. rer. nat.,
Zugspitzstrasse 13, D-8035 Gauting (DE)**
Erfinder: **Reimann, Hans, Dr. rer. nat.,
Rudolf-Wilke-Weg 21, D-8000 München 71 (DE)**
Erfinder: **Frydman, Allen, Wilhelm-Busch-Strasse 18,
D-8000 München 71 (DE)**

(74) Vertreter: **Schaefer, Gerhard, Dr., Linde
Aktiengesellschaft Zentrale Patentabteilung,
D-8023 Höllriegelskreuth (DE)**

## Beschreibung

Die Erfindung betrifft ein Verfahren zur biologischen Nitrifikation von Abwasser in einer Begasungszone in Gegenwart von Belebtschlamm mit nitrifizierenden Bakterien und unter Zuführung von Luft und/oder Sauerstoff, bei dem das aus der Begasungszone abgezogene Abwasser-Belebtschlamm-Gemisch in einer Nachklärung zu nitrifiziertem Wasser und Schlamm aufgeteilt und der Schlamm mindestens teilweise in die Begasungszone zurückgeführt wird und bei dem das Abwasser-Belebtschlamm-Gemisch nach der Begasungszone zunächst einer unter anoxischen Bedingungen betriebenen Zone zugeleitet wird.

In nitrifizierenden Belebungsanlagen werden bekanntlich die im Abwasser vorhandenen organischen Stickstoffverbindungen bei genügender Sauerstoffzufuhr, ausreichender Wassertemperatur und geeigneter Schlammbelastung zunächst in einem Hydrolyseschritt mit Hilfe heterotropher Bakterien in Ammoniak umgesetzt und anschliessend durch im Schlamm vorhandene autotrophe Bakterien zu Nitrit und Nitrat oxidiert. Enthält dann das aus dem Nitrifikationsbecken ablaufende Abwasser-Belebtschlamm-Gemisch eine hohe Konzentration an Nitraten, besteht im nachgestellten Nachklärbecken die Gefahr, dass infolge von partiellen Denitrifikationsvorgängen mit einer Nitratreduktion zu Stickstoff durch aufsteigende Gasblasen eine Schwimmschlammbildung gefördert wird, in deren Folge es im Ablauf zu Schlammabtrieb verbunden mit einer Überschreitung der Ablaufgrenzwerte und einem Verlust an aktiver Biomasse kommen kann.

Gegenmassnahmen bestehen bisher darin, eine im Nachklärbecken gebildete Schwimmschlammdecke durch entsprechende Räumeinrichtungen abzuziehen oder durch Aufgasung des dem Nachklärbecken zulaufenden Abwasser-Belebtschlamm-Gemisches mittels Luft oder Sauerstoff die Ausbildung anoxischer Bereiche im Nachklärbecken und damit die Denitrifikationsvorgänge zu unterbinden.

Eine mechanische Beseitigung der Schwimmschlammdecke kann in den meisten Fällen aber nur unvollkommen durchgeführt werden. Ebenso ist die Wirkung einer Sauerstoffsättigung nicht immer sicher gegeben, da damit nur dann Denitrifikationsvorgänge in der Nachklärung vermieden werden können, solange nicht, bedingt durch verminderten Zulauf, die Verweilzeit in der Nachklärung so stark erhöht wird, dass sich als Folge der Sauerstoffzehrung doch anoxische Bedingungen einstellen. Somit können die bekannten Gegenmassnahmen, abgesehen davon, dass sie relativ aufwendig sind, keine befriedigende Lösung im Hinblick auf die Einhaltung vorgegebener Ablaufgrenzwerte darstellen.

Anders liegen die Verhältnisse bei Verfahren zur vollständigen Denitrifikation, wie sie beispielsweise im Lehr- und Handbuch der Abwassertechnik, Band II, 2. Auflage, 1975, Seiten 602 bis 604, beschrieben sind. Bei solchen bekannten Verfahren ist zwischen Belüftungs- und Nachklärbecken ein unter anoxischen Bedingungen betriebenes Denitrifikationsbecken angeordnet, in dem zur Erreichung einer optimalen Stickstoffelimination während einer mindestens gleich langen Aufenthaltsdauer wie im Belüftungsbecken eine Vermischung des nitrifizierten Abwasser-Belebtschlamm-Gemisches mit einem Reduktionsmittel durchgeführt wird. Damit werden in das Nachklärbecken nicht mehr Abwasser-Belebtschlamm-Gemische mit einer hohen Konzentration an Nitraten eingeleitet, so dass dann im Nachklärbecken keine Nitratreduktion mehr stattfinden kann. Stattdessen werden denitrifizierte Abwasser-Belebtschlamm-Gemische in das Nachklärbecken eingeleitet, wodurch die Gefahr besteht, dass der Schlamm aufgrund von Sauerstoffmangel durch Fäulnisvorgänge geschädigt wird und auftreibt. Zur Vermeidung von Schwimmschlamm im Nachklärbecken wird deshalb in diesem Fall im Anschluss an die Denitrifikation eine kurze Belüftung durchgeführt.

Der Erfindung liegt die Aufgabe zugrunde, ein Verfahren der eingangs genannten Art sowie eine Vorrichtung zur Durchführung des Verfahrens so auszugestalten, dass auf einfache und wirtschaftliche Weise eine Schwimmschlammbildung in der Nachklärung vermieden wird und dadurch eine hohe Nitrifikationsleistung mit guten Ablaufwerten sichergestellt ist.

Diese Aufgabe wird erfindungsgemäss dadurch gelöst, dass das Abwasser-Belebtschlamm-Gemisch in der unter anoxischen Bedingungen betriebenen Zone für eine Zeitdauer von 15 bis 40% der Aufenthaltszeit in der Begasungszone gehalten wird.

Mit dieser Verfahrensweise, die im Gegensatz zu dem allgemeinen Bestreben besteht, die Nachklärung nicht mit einem anoxischen Ablauf zu beschicken, wird erreicht, dass die bisher in der Nachklärung ablaufenden Denitrifikationsvorgänge in gezielter Weise in eine nur ein geringes Nutzvolumen aufweisende anoxische Zone vorverlegt werden, wodurch die Schwimmschlammbildung im Nachklärbecken unterbleibt. Dies ist darauf zurückzuführen, dass unmittelbar nach Eintritt anoxischer Betriebsbedingungen Denitrifikationsvorgänge am leichtesten ablaufen, da dann die höchste Konzentration an leicht abbaubaren organischen Verbindungen, wie z.B. desorbierte Stoffe, Stoffwechsel- und Autolyseprodukte des Belebtschlamms, vorhanden ist. Dabei werden diese organischen Stoffe in der anoxischen Zone weitgehend durch Nitratreduktion, d.h. die Oxidationswirkung des Nitrats, eliminiert und die gebildeten Gase ausgeschieden. Liegt die Aufenthaltsdauer des Abwasser-Belebtschlamm-Gemisches in der anoxischen Zone in den angegebenen Bereichen, läuft dann im Nachklärbecken nur noch eine langsame Schlammautolyse ab. Auch werden durch die beruhigten Strömungsverhältnisse die Stoffübergänge so stark herabgesetzt, dass eine Schwimmschlammbildung unterbleibt.

Um eine sichere Nitratreduktion in der anoxischen Zone zu erhalten, ist es vorteilhaft, das Abwasser-Belebtschlamm-Gemisch während der anoxischen Behandlung langsam umzuwälzen. Dies kann beispielsweise mit Hilfe eines langsam laufenden Rührwerks erfolgen. Dadurch werden zum einen Nitrat und nitratreduzierender Belebtschlamm in sicherer Weise in Berührung gebracht, und zum anderen wird der Gasaustrag intensiviert.

Stattdessen ist es ebenso von Vorteil, das Abwasser-Belebtschlamm-Gemisch während der anoxischen Behandlung von unten nach oben durch eine Schlammschicht zu leiten. Durch die damit verbundene Erhöhung der Schlammkonzentration kann das Nutzvolumen der anoxischen Zone auf 15 bis 20% des Volumens des nitrifizierenden Belebungsbeckens weiter vermindert werden. Auf eine sehr weitgehende Schlammrückhaltung muss dabei keine Rücksicht genommen werden, da sich noch das Nachklärbecken anschliesst.

Eine Vorrichtung zur Durchführung des Verfahrens umfasst einen Nitrifikationsreaktor und eine nachgeschaltete Nachkläreinrichtung mit Schlammrückleitung in den Nitrifikationsreaktor sowie ein zwischen Nitrifikationreaktor und Nachkläreinrichtung zwischengeschaltetes, anoxische Bedingungen aufweisendes Becken. Erfindungsgemäss ist eine solche Vorrichtung dadurch gekennzeichnet, dass das anoxische, gegebenenfalls eine Umwälzeinrichtung aufweisende Becken ein Volumen von 15 bis 40% des Volumens des Nitrifikationsreaktors aufweist.

Vorteilhafterweise ist dabei das anoxische Becken als Beckenabschnitt im Endbereich des Nitrifikationsreaktors oder als Beckenabschnitt im Einlaufbereich des Nachklärbeckens ausgebildet. Damit ist es nicht erforderlich, für die anoxische Zone ein eigenes neues Becken zu errichten. Voraussetzung im ersten Fall ist allerdings, dass auch in dem auf diese Weise verkleinerten Nitrifikationsbecken die Belastungen gering genug gehalten werden können, um eine ausreichende Nitrifikation zu gewährleisten.

Eine weitere vorteilhafte Ausbildung der Vorrichtung besteht darin, dass im anoxischen Becken eine Schlammschicht ausgebildet ist und der Zulauf zum anoxischen Becken im unteren Bereich und der Ablauf vom anoxischen Becken im oberen Bereich angeordnet ist.

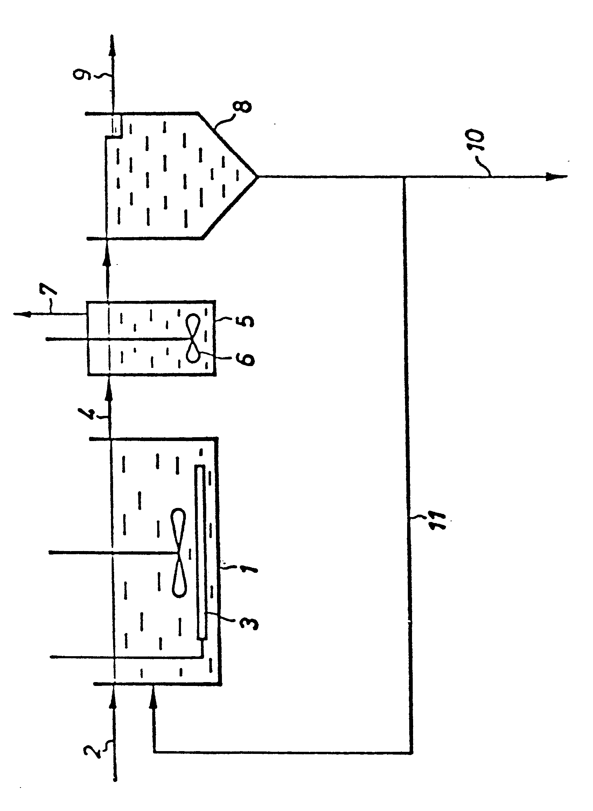

In der Zeichnung ist ein Ausführungsbeispiel einer Vorrichtung zur Durchführung des erfindungsgemässen Verfahrens schematisch dargestellt.

Mit 1 ist ein Nitrifikationsbecken einer biologischen Abwasserreinigungsanlage bezeichnet. Das Nitrifikationsbecken 1 ist zur Atmosphäre hin offen ausgebildet und weist einen Abwasserzulauf 2, eine Belüftungseinrichtung 3, wie beispielsweise einen von einem Elektromotor angetriebenen Oberflächenbelüftungskreisel oder ein Unterwasserbelüftungssystem mit Druckluftzuführung und Umwälzeinrichtung, auf. An das Nitrifikationsbecken 1 ist über eine Verbindungsleitung 4 ein Nachklärbecken 8 zur Trennung von nitrifiziertem Abwasser und Schlamm angeschlossen, dem ein Ablauf 9 für gereinigtes Wasser und eine Schlammableitung 10 zugeordnet ist. An die Schlammableitung 10 ist eine Schlammrückleitung 11 zum Nitrifikationsbecken 1 zur Rückführung von nitrifizierenden Bakterien angeschlossen.

Anstelle der offenen Ausbildung des Nitrifikationsbeckens ist es selbstverständlich auch möglich, dieses gegen die Atmosphäre abzudecken. In diesem Fall kann dann der Belüftungseinrichtung auch zweckmässigerweise Sauerstoff oder zumindest mit Sauerstoff angereicherte Luft als Oxidationsmittel zugeführt werden.

Zur Vermeidung von Schwimmschlammproblemen in dem Nachklärbecken 8 aufgrund von Denitrifikationsvorgängen ist erfindungsgemäss in der Verbindungsleitung 4 ein anoxisches Becken 5 angeordnet, dessen Nutzvolumen 15 bis 40% des Volumens des Nitrifikationsbeckens 1 beträgt. Damit können die im Abwasser-Belebtschlamm-Gemisch des Nitrifikationsbeckens 1 enthaltenen organischen Stoffe bereits in dem anoxischen Becken 5 durch Nitratreduktion eliminiert und die dabei entstehenden Gase ausgeschieden werden. Zur Aufrechterhaltung der anoxischen Bedingungen in dem Becken 5 ist dieses vorzugsweise gegen die Atmosphäre geschlossen ausgebildet. Eine langsam laufende Umwälzeinrichtung 6 unterstützt den Vorgang der Nitratreduktion durch intensives Inberührungbringen der organischen Stoffe mit Nitratbakterien sowie den Gasaustrag. Abgas wird über eine Abgasleitung 7 abgezogen. Durch die Grösse des anoxischen Beckens 5 ist dabei die Aufenthaltszeit des Abwasser-Belebtschlamm-Gemisches im anoxischen Becken 5 so gewählt, dass in der nachgeschalteten Nachklärung 8 nur noch eine langsame Schlammautolyse stattfindet.

Um die Errichtung eines zusätzlichen Beckens vermeiden zu können, ist es erfindungsgemäss ebenso möglich, im Endbereich des Nitrifikationsbeckens oder im Einlaufbereich des Nachklärbeckens einen Beckenabschnitt unter anoxischen Bedingungen zu betreiben. Ist das Nachklärbecken als Rundklärbecken ausgebildet, kann dabei konzentrisch um das Einlaufbauwerk ein Ringraum als anoxisches Becken abgeteilt sein.

## Patentansprüche

1. Verfahren zur biologischen Nitrifikation von Abwasser in einer Begasungszone in Gegenwart von Belebtschlamm mit nitrifizierenden Bakterien und unter Zuführung von Luft und/oder Sauerstoff, bei dem das aus der Begasungszone abgezogene Abwasser-Belebtschlamm-Gemisch in einer Nachklärung zu nitrifiziertem Wasser und Schlamm aufgeteilt und der Schlamm mindestens teilweise in die Begasungszone zurückgeführt wird und bei dem das Abwasser-Belebtschlamm-Gemisch nach der Begasungszone zunächst einer unter anoxischen Bedingungen betriebenen Zone zugeleitet wird, dadurch gekennzeichnet, dass das Abwasser-Belebtschlamm-Gemisch in der unter anoxischen Bedingungen betriebenen Zone für eine Zeitdauer von 15 bis 40% der Aufenthaltszeit in der Begasungszone gehalten wird.

2. Verfahren nach Anspruch 1, dadurch gekennzeichnet, dass das Abwasser-Belebtschlamm-Gemisch während der anoxischen Behandlung langsam umgewälzt wird.

3. Verfahren nach Anspruch 1, dadurch gekennzeichnet, dass das Abwasser-Belebtschlamm-Gemisch während der anoxischen Behandlung von unten nach oben durch eine Schlammschicht geleitet wird.

4. Vorrichtung zur Durchführung des Verfahrens nach einem der Ansprüche 1 bis 3 mit einem Nitrifikationsreaktor und einer nachgeschalteten Nachkläreinrichtung mit Schlammrückleitung in den Nitrifikationsreaktor und mit einem zwischen Nitrifikationsreaktor und Nachkläreinrichtung zwischengeschalteten, anoxische Bedingungen aufweisenden Becken, dadurch gekennzeichnet, dass das anoxische, gegebenenfalls eine Umwälzeinrichtung (6) aufweisende Becken (5) ein Volumen von 15 bis 40% des Volumens des Nitrifikationsreaktors (1) aufweist.

5. Vorrichtung nach Anspruch 4, dadurch gekennzeichnet, dass das anoxische Becken (5) als Beckenabschnitt im Endbereich des Nitrifikationsreaktors (1) ausgebildet ist.

6. Vorrichtung nach Anspruch 4, dadurch gekennzeichnet, dass das anoxische Becken (5) als Beckenabschnitt im Einlaufbereich des Nachklärbeckens (8) ausgebildet ist.

7. Vorrichtung nach einem der Ansprüche 4 bis 6, dadurch gekennzeichnet, dass im anoxischen Becken (5) eine Schlammschicht ausgebildet ist und der Zulauf zum anoxischen Becken (5) im unteren Bereich und der Ablauf vom anoxischen Becken (5) im oberen Bereich angeordnet ist.

**Claims**

1. A process for the biological nitrification of waste water in a gas-treatment zone, in the presence of activated sludge with nitrifying bacteria and with the supply of air and/or oxygen, wherein the mixture of waste water and activated sludge withdrawn from the gas-treatment zone is divided into nitrified water and sludge in an after-clarification step and the sludge is at least partially returned to the gas-treatment zone and wherein after the gas-treatment zone, the mixture of waste water and activated sludge is first supplied to a zone which is operated under anaerobic conditions, characterised in that the mixture of waste water and activated sludge is retained in the zone operated under anaerobic conditions for a period equal to 15 to 40% of the time of sojourn in the gas-treatment zone.

2. A process as claimed in Claim 1, characterised in that during the anaerobic treatment, the mixture of waste water and activated sludge is circulated slowly.

3. A process as claimed in Claim 1, characterised in that during the anaerobic treatment, the mixture of waste water and activated sludge is passed upwardly through a sludge layer.

4. Apparatus for carrying out the method as claimed in one of Claims 1 to 3 comprising a nitrification reactor and a subsequent after-clarification device, sludge return to the nitrification reactor, and a vessel displaying anaerobic conditions located between the nitrification reactor and the after-clarification device, characterised in that the anaerobic vessel (5), which may have a circulating device (6), has a volume of 15 to 40% of the volume of the nitrification reactor (1).

5. Apparatus as claimed in Claim 4, characterised in that the anaerobic basin (5) is formed as a vessel section in the end region of the nitrification reactor (1).

6. Apparatus as claimed in Claim 4, characterised in that the anaerobic basin (5) is formed as a vessel section in the inflow region of the after-clarification vessel.

7. Apparatus as claimed in one of Claims 4 to 6, characterised in that a sludge layer is formed in the anaerobic vessel (5) and the inlet to the anaerobic vessel (5) is arranged in the lower region and the outlet from the anaerobic vessel (5) in the upper region thereof.

**Revendications**

1. Procédé de nitrification biologique des eaux résiduaires dans une zone de gazéification, en présence de boue activée renfermant des bactéries nitrifiantes et avec adduction d'air et/ou d'oxygène, procédé dans lequel le mélange d'eau résiduaire et de boue activée retiré de la zone de gazéification est séparé, dans une étape de post-clarification, en eau nitrifiée et en boue, cette étant recyclée au moins partiellement vers la zone de gazéification, et dans lequel le mélange d'eau résiduaire et de boue activée ayant quitté la zone de gazéification est d'abord amené vers une zone fonctionnant dans des conditions anoxiques, caractérisé en ce qu'on retient, dans la zone fonctionnant dans des conditions anoxiques, le mélange d'eau résiduaire et de boue activée pendant une durée représentant 15 à 40% de la durée de séjour dans la zone de gazéification.

2. Procédé selon la revendication 1, caractérisé en ce que, pendant le traitement anoxique, le mélange d'eau résiduaire et de boue activée est soumis à une agitation lente.

3. Procédé selon la revendication 1, caractérisé en ce que, pendant le traitement anoxique, le mélange d'eau résiduaire et de boue activée est amené à traverser une couche de boue en se déplaçant du bas vers le haut.

4. Dispositiv pour la mise en œuvre du procédé selon l'une des revendications 1 à 3, comportant un réacteur de nitrification et, en aval de celui-ci, une installation de post-clarification avec des moyens de recyclage de la boue vers le réacteur de nitrification, ainsi qu'une cuve présentant des conditions anoxiques intercalée entre le réacteur de nitrification et l'installation de post-clarification, caractérisé en ce que la cuve anoxique (5) qui comporte, le cas échéant, des moyens de brassage, présente un volume égal à 15-40% du volume du réacteur de nitrification (1).

5. Dispositif selon la revendication 4, caractérisé en ce que la cuve anoxique (5) est constituée par une section de cuve située dans la partie terminale du réacteur de nitrification (1).

6. Dispositif selon la revendication 4, caractérisé en ce que la cuve anoxique (5) est constituée par une section de cuve dans la zone d'entrée de la cuve de post-clarification (8).

7. Dispositif selon une des revendications 4 à 6, caractérisé en ce qu'une couche de boue est formée dans la cuve anoxique (5), cependant que l'amenée vers la cuve anoxique (5) est disposée dans la zone inférieure et que la sortie de la cuve anoxique (5) est disposée dans la zone supérieure.